Europäisches Patentamt

European Patent Office

Office européen des brevets

(19)

(11) Veröffentlichungsnummer: **0 247 322**
**A2**

(12) **EUROPÄISCHE PATENTANMELDUNG**

(21) Anmeldenummer: 87104510.0

(22) Anmeldetag: 26.03.87

(51) Int. Cl.4: **C03B 37/012**

| | |
|---|---|
| Die Bezeichnung der Erfindung wurde geändert (Richtlinien für die Prüfung im EPA, A-III, 7.3). | (71) Anmelder: **Siemens Aktiengesellschaft Berlin und München Wittelsbacherplatz 2 D-8000 München 2(DE)** |
| (30) Priorität: 27.05.86 DE 3617716 | |
| (43) Veröffentlichungstag der Anmeldung: 02.12.87 Patentblatt 87/49 | (72) Erfinder: **Schneider, Hartmut, Dr.rer.nat. Ignaz-Günther-Strasse 42 D-8000 München 81(DE)** Erfinder: **Schoberth, Achim, Dipl.-Ing. Tegernseer Landstrasse 148 D-8000 München 90(DE)** |
| (84) Benannte Vertragsstaaten: DE FR GB | |

(54) **Verfahren zur Herstellung einer Vorform zum Ziehen von optischen Glasfasern.**

(57) Verfahren zur Herstellung einer einen Kern und einen Mantel aufweisenden Vorform (VF) aus bariumhaltigem Schwermetall-Fluoridglas zum Ziehen von Infrarot-Lichtwellenleitern für die optische Nachrichtentechnik durch Angießen von - schmelzflüssigem Glas an einen vorbestimmten Körper aus festem Glas. Bisher wurde ein solches Verfahren so ausgeführt, daß in ein Rohr aus Mantelglas schmelzflüssiges Kernglas gegossen wurde. Zur Erzielung dickerer Verformen wird hier so vorgegangen, daß ein massiver Stab (St) aus dem Kernglas mit schmelzflüssigem Mantelglas (MGl) umgeben wird. Ein Problem bei diesem Verfahren ist die - schlechte Qualität der Grenzfläche zwischen Kern und Mantel der erzeugten Vorform. Diese Grenzfläche kann bei dem hier beschriebenen Verfahren dadurch verbessert werden, daß die Oberfläche (Of) des massiven Stabs (St) vor dem Umgeben mit dem Mantelglas (MGl) geätzt wird. Durch Ätzen mit einer $ZrOCl_2$-Lösung wird eine nahezu perfekte Grenzfläche (GF) erhalten.

FIG 1a

FIG 1b

FIG 1c

FIG 1d

EP 0 247 322 A2

## Verfahren zur Herstellung einer Vorform zum Ziehen von Glasfasern, insbesondere Infrarot-Lichtwellenleitern für die optische Nachrichtentechnik

Die Erfindung betrifft ein Verfahren zur Herstellung einer Vorform zum Ziehen von Glasfasern, insbesondere Infrarot-Lichtwellenleitern für die optische Nachrichtentechnik, nach dem Oberbegriff des Patentanspruchs 1.

Infrarot-Lichtwellenleiter für die optische Nachrichtentechnik werden aus sauerstofffreien Schwermetallfluorid-Gläsern hergestellt. Netzwerkbildner sind bei diesen Gläsern $ZrF_4$, $HfF_4$ oder $TlF_4$. Als Netzwerkwandler dient $BaF_2$. Der Schwerpunkt in der Glasstabilität liegt nahe bei der Zusammensetzung Bariumfluorodizirkonat $BaZr_2F_{10}$. Zur Erhöhung der Glasstabilität wird in der Regel mit dreiwertigen Fluoriden der seltenen Erden, beispielsweise mit $LaF_3$, $GdF_3$, $YbF_3$ oder mit $YF_3$, $AlF_3$ dotiert, beispielsweise mit 0 bis 20 Mol-Prozent. Eine typische Glaszusammensetzung ist beispielsweise 57 $ZrF_4$ . 34 $BaF_2$ . 5 $LaF_3$ . 4 $AlF_3$. Häufig wird zur Unterdrückung der Kristallisationstendenz noch Alkalifluorid, beispielsweise NaF oder LiF anstelle eines Teils des $BaF_2$ zugesetzt. Charakteristisch ist die generelle Verwendung von $BaF_2$ als Glasbestandteil.

Fasern aus Fluoridglas mit Stufenbrechzahlprofil werden heute nahezu ausschließlich nach der Vorform-Methode hergestellt. Dabei wird zunächst ein Glasstab mit einem Kern aus Kernglas und einem Mantel aus Mantelglas präpariert, der dann zur Faser dünn gezogen wird. Typisch für solche Glasstäbe sind ein dem äußeren Manteldurchmesser entsprechender Außendurchmesser von 12 mm, ein Kerndurchmesser von 10 mm, eine Länge von 150 mm und einer Brechzahldifferenz zwischen dem Kernglas und dem Mantelglas von 0,5 bis 1 %. Die aus einem solchen Stab gezogenen Fasern haben typische Außendurchmesser von 0,1 bis 0,2 mm.

Wegen des Barium-Gehalts der Gläser lassen sich die bekannten CVD-Methoden für die Herstellung von Vorformen aus Quarzglas hier nicht anwenden. Vielmehr geht man über die - schmelzflüssige Phase, die dann sehr rasch abgekühlt werden muß, damit das Material glasig erstarrt und Kristallisation vermieden wird. Deshalb wird das Mantelglas zunächst in eine zylindrische Vorform eingegossen, die in der Regel aus goldbeschichtetem Messing gefertigt wird. Durch Rotation der Form gelingt es dann, ein Rohr aus Mantelglas auszuformen, in das anschließend schmelzflüssiges Kernglas eingefüllt werden kann. Dieses Verfahren ist unter dem Begriff "Rotational Casting" bekannt (siehe dazu D.C.Tran, C.F.Fisher, G.H.Sigel Jr.: "Fluoride glass preforms prepared by a rotational casting process", Electronics Lett. 18 (1982) S. 657-658 und US-Patent 4 519 826).

Häufig findet man allerdings bei derart hergestellten Vorformen Kristalle oder Blasen an der Glasgrenzfläche zwischen Kern und Mantel. Die Ursache dürfte in der Alterung der nicht gekühlten Innenfläche des Mantelglasrohres zu sehen sein, wobei Vorgänge, wie die Aufnahme von Feuchte aus der Atmospäre oder das Abdampfen von Schmelzbestandteilen, beteiligt sind.

Bei einem zweiten Verfahren wird die kippbare Hohlform zunächst mit schmelzflüssigem Mantelglas gefüllt und kurz darauf durch Umdrehen teilweise wieder entleert. Dies ist möglich, weil das - schmelzflüssige Mantelglas vom äußeren Rand nach innen hin erstarrt. Unmittelbar darauf wird - schmelzflüssiges Kernglas nachgefüllt. Dieses Verfahren ist unter dem Begriff "Build-in Casting" (siehe S.Mitachi, T.Migashita, T.Kanamori: "Fluoride glass cladded optical fibres for mid-infrared ray transmission", Electron. Lett. 17 (1981) S. 591-592) bekannt. Bei diesem Verfahren ist die Grenzfläche in der Regel weniger gestört, dafür weicht jedoch der Kerndurchmesser stark von der gewünschten Zylinderform ab.

Den beiden bekannten Verfahren gemeinsam ist das Prinzip, zunächst ein Rohr aus Mantelglas herzustellen, das dann mit schmelzflüssigem Kernglas aufgefüllt wird. Eine Aufwärmung des Hüllglases durch das Kernglas läßt sich hierbei nicht vermeiden. Dies begünstigt ebenfalls das Kristallwachstum im Mantelglas. Der Wärmewiderstand des Hüllglases ist im Hinblick auf die Herstellung dickerer Vorformen ungünstig, weil dieser die rasche Abkühlung des zentralen Volumens verhindert.

Aufgabe der Erfindung ist es, ein Verfahren der eingangs genannten Art anzugeben, bei welchem das Problem der raschen Abkühlung eines zentralen Volumens nicht auftritt und mit dem dickere Vorformen problemlos hergestellt werden können.

Diese Aufgabe wird gemäß dem kennzeichnenden Teil des Patentanspruchs 1 dadurch gelöst, daß ein massiver Stab aus dem Kernglas mit - schmelzflüssigem Mantelglas umgeben wird.

Das erfindungsgemäße Verfahren ist im Hinblick auf die Wärmeabführung wesentlich günstiger, weil die Wärme nicht mehr durch das Hüllglas abgeführt werden muß, sondern direkt in eine umgebende Hohlform aus relativ gut wärmeleitendem Material, in der Regel eine Metallform, abgegeben oder in einen Kühlgasstrom abgeführt werden kann.

Ein bevorzugtes Verfahren der genannten Art wird nach Anspruch 2 so ausgeführt, daß der massive Stab in eine zylindrische Hohlform größeren Querschnitts aus einem relative gut wärmeleitenden Material eingebracht und der ringförmige Hohlraum zwischen dem Stab und der umgebenden Hohlform mit dem schmelzflüssigen Mantelglas aufgefüllt wird.

Die Hohlform besteht dabei vorzugsweise gemäß Anspruch 3 aus Metall.

Bei einer anderen bevorzugten Ausgestaltung des erfindungsgemäßen Verfahrens wird gemäß Anspruch 4 so vorgegangen, daß das schmelzflüssige Mantelglas in einem Strahl auf die Umfangsfläche des um seine Achse rotierenden massiven Stabes aufgegossen wird.

Dabei ist es vorteilhaft, wenn gemäß Anspruch 5 die auf den massiven Stab aufgegossene schmelzflüssige Mantelglasschicht durch einen Kühlgasstrom abgeschreckt wird.

Gemäß einer weiteren bevorzugten Ausgestaltung des erfindungsgemäßen Verfahrens wird nach Anspruch 6 so vorgegangen, daß der massive Stab aus dem Kernglas durch Eintauchen in das schmelzflüssige Mantelglas und wieder Herausnehmen des Stabes beschichtet wird.

Auch bei diesem Verfahren ist es zweckmäßig, wenn nach Anspruch 7 die am wieder herausgezogenen massiven Stab haften gebliebene schmelzflüssige Mantelglasschicht durch einen Kühlgasstrom abgeschreckt wird.

Zweckmäßigerweise wird einem Kühlgasstrom nach Anspruch 8 ein fluorhaltiges, wasserstofffreies Molekülgas oder/und ein Chlorkohlenwasserstoff zugesetzt.

Der massive Stab aus dem Kernglas läßt sich auf einfache Weise gemäß Anspruch 9 durch diesen von schmelzflüssigem Kernglas in eine zylindrische Hohlform erzeugen.

Es wurde festgestellt, daß auch bei dem erfindungsgemäßen Verfahren Glasgrenzflächen zwischen dem Kernglas und dem Mantelglas von schlechter Qualität auftreten. Es wurde gefunden, daß die Ursache dafür in der mangelhaften Oberfläche des eingesetzten massiven Stabes aus dem Kernglas liegt. Eine solche mangelhafte Oberfläche kann herstellungsbedingt sein, beispielsweise wenn der massive Stab aus dem Kernglas durch Gießen des schmelzflüssigen Kernglases in eine zylindrische Hohlform aus Metall erzeugt wird. Durch den Kontakt mit der Metalloberfläche entsteht eine zerklüftete und teilweise kristallisierte Oberfläche.

Glasgrenzflächen zwischen dem Kernglas und dem Mantelglas von guter Qualität können erfindungsgemäß dadurch erhalten werden, daß nach Anspruch 10 die Oberfläche des massiven Stabes aus dem Kernglas geätzt und erst danach mit schmelzflüssigem Mantelglas umgeben wird.

Eine nahezu perfekte Glasgrenzfläche zwischen Kernglas und Mantelglas wird erreicht, wenn gemäß Anspruch 11 das Kernglas und das Mantelglas aus einem sauerstofffreien Schwermetall-Fluoridglas bestehen, zumindest das Kernglas Barium enthält und die Oberfläche des aus diesem Kernglas bestehenden massiven Glasstabes mit einer $ZrOCl_2$-Lösung geätzt wird.

Wegen der niedrigen Rayleigh-Streuung sowie der hohen IR-Transparenz dieser sauerstofffreien Schwermetall-Fluoridgläser und der nahezu perfekten Glasgrenzfläche zwischen Kern und Mantel, die man mit dem Verfahren nach Anspruch 11 erzielt, dürfen Lichtleitfasern von ca. $2.10^{-2}$ dB/km bei 2550 nm Wellenlänge erwartet werden, deren Herstellung bisher noch nicht gelungen ist (siehe D.C. Tran: "Advances in Mid-Infrared Fibres", Proc. of the 11th Europ. Conf. Opt. Comm., Venice 1985, S. 14-20).

Bislang wurden nur kurze gute Faserstücke von weniger als 100 m erhalten, weil gehäuft Fehler, wie Blasen oder kristalline Einschlüsse, an der Grenzfläche zwischen Kern und Mantel auftraten.

Ausführungsbeispiele der Erfindung werden anhand der Figuren in der nun folgenden Beschreibung näher erläutert. Von den Figuren zeigen:

Figuren 1a bis 1d Verfahrensstufen bei der Herstellung einer Vorform mit Hilfe einer Hohlform,

Figur 2 Ausschnitte aus vergrößert dargestellten Querschnitten zweier mit Hilfe einer Hohlform hergestellten Vorformen, von denen die linke ohne und die rechte mit Ätzen hergestellt wurde,

Figur 3 eine schematische Darstellung der Vorformherstellung durch Aufgießen des schmelzflüssigen Mantelglases in einem Strahl auf den rotierenden massiven Stab, und

Figuren 4a und 4b in schematischer Darstellung zwei Verfahrensstufen bei der Herstellung einer Vorform durch Tauchen des massiven Stabes in schmelzflüssiges Mantelglas.

Die Figur 1a zeigt schematisch die Herstellung des massiven Stabes aus dem Kernglas. Das in einem Tiegel Ti, beispielsweise aus Platin, erzeugte schmelzflüssige Kernglas KGl wird in eine im vertikalen Schnitt gezeigte zylindrische Hohlform HFol aus Metall, beispielsweise aus mit Gold beschichtetem Messing, gegossen, worin es rasch zum massiven Stab St aus Kernglas erstarrt. Dafür sorgt die gute Wärmeleitfähigkeit des Metalls der blockartigen Hohlform HFol.

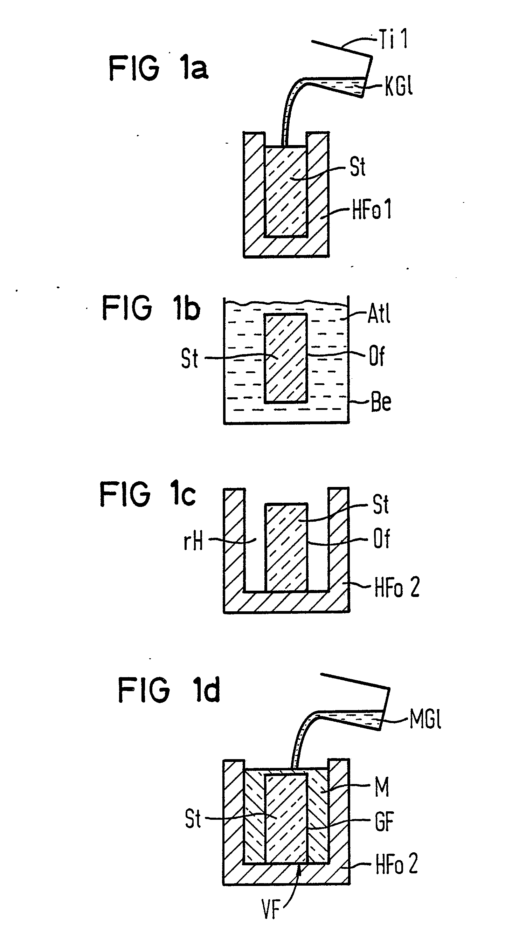

Der Stab St wird aus der Hohlform HFol herausgenommen und seine Oberfläche, zumindest seine Umfangsfläche, geätzt. Dies kann beispielsweise nach Figur 1b durch Eintauchen des Stabes St in eine in einem Behälter Be befindliche Ätzlösung Atl geschehen, in der man ihn eine geeignete Zeit lang verbleiben läßt.

Nach Herausnahme des geätzten Stabes St wird er in eine zylindrische Hohlform HFo2 größeren Querschnitts aus Metall, beispielsweise aus mit Gold beschichtetem Messing, gestellt und in einer Inertgasatmosphäre getrocknet (Fig. 1c).

Danach wird das in einem Tiegel Ti2, beispielsweise aus Platin, erzeugte schmelzflüssige Mantelglas MGI in den ringförmigen Hohlraum rH zwischen dem Stab St und der umgebenden Hohlform HFo2 gefüllt, sow wie es in der Figur 1d dargestellt ist. Die Temperatur der Hohlform HFo2 wird dazu gerade so hoch eingestellt, daß der Stab St nicht zerspringt. Die gute Wärmeleitfähigkeit des Metalls der Hohlform HFo2, deren Masse ein Vielfaches der Glasmasse sein sollte, sorgt für eine so rasche Abkühlung des Mantelglases MGI, daß dieses zu Glas erstarrt. Danach kann die fertige Vorform aus der Hohlform HFo2 herausgenommen werden.

Mit dem soeben beschriebenen Verfahren wurde beispielsweise eine Vorform aus einem bariumhaltigen Schwermetall-Fluoridglas zum Ziehen von Infrarot-Lichtwellenleitern hergestellt. Verwendet wurde eine Glaskomposition, die aus ZrHfBaLaAlNa bestand. Für das Kernglas wurde die Zusammensetzung

53 $ZrF_4$ . 0 $HfF_4$ . 20 $BaF_2$ . 4 $LaF_3$ . 3 $AlF_3$ . 20 NaF

und für das Mantelglas MGI die Zusammensetzung

40 $ZrF_4$ . 13 $HfF_4$ . 18 $BaF_2$ . 4 $LaF_3$ . 3 $AlF_3$ . 22 NaF

verwendet. Die Zahlenangaben in diesen beiden Ausdrücken verstehen sich als Mol-Prozente. Insbesondere enthielt danach das Kernglas kein Hf.

Zum Schmelzen der beiden Gläser in den Tiegeln wurden Temperaturen von 850 bis 900°C verwendet. Die Hohlform, in die das 700° heiße schmelzflüssige Kern-bzw. Mantelglas gegossen wurde, wurde auf 250°C vorgeheizt. Die blockförmigen Hohlformen aus mit Gold beschichtetem Messing hatten etwa die vierfache Masse des in sie zu gießenden schmelzflüssigen Glases. Dadurch wurde erreicht, daß sich das eingegossene schmelzflüssige Glas innerhalb einer Minute von 700°C auf 250°C abkühlt und dadurch zum Glas erstarrt. Die 250°C reichen auch aus, daß beim Schritt nach Fig. 1d der Stab St nicht springt. Zum Ätzen des Stabes St aus dem oben angegebenen Kernglas wurde eine $ZrOCl_2$-Lösung verwendet. Dadurch wird eine nahezu perfekte Grenzfläche GF zwischen dem aus dem Stab St bestehenden Kern und dem umgebenden Mantel M der Vorform VF erreicht.

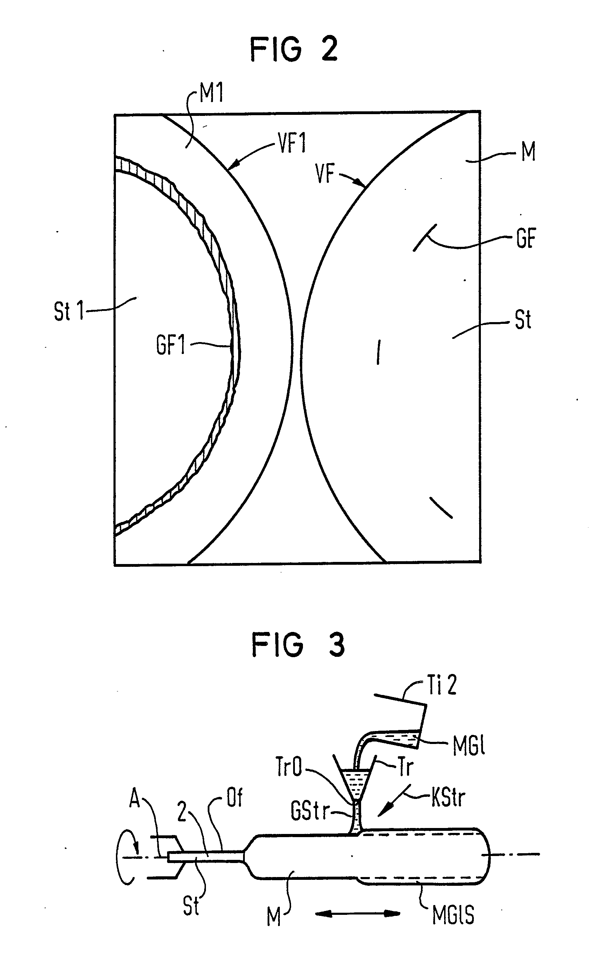

In der Figur 2 sind Ausschnitte aus Querschliffen zweier Vorformen VF1 und VF zum Vergleich nebeneinander gestellt. Die Vorform VF1 wurde nach dem vorstehend beschriebenen Verfahren unter Auslassung des Ätzschrittes nach Fig. 1b hergestellt. An der Grenzfläche zwischen dem Stab St1 und dem Mantel M1 dieser Vorform VF1 erkennt man deutlich eine Vielzahl von Defekten, die aus Blasen und Kristallen bestehen.

Die Vorform VF wurde vollständig nach dem vorstehend beschriebenen Verfahren hergestellt, d.h. der Stab St wurde mit $ZrOCl_2$-Lösung geätzt. Die Grenzfläche GF zwischen dem Stab St und dem Mantel ist kaum mehr zu erkennen.

Das $ZrOCl_2$-Ätzverfahren für Barium enthaltende Schwermetall-Fluoridgläser ist in der älteren Patentanmeldung P 35 14 082.8 (VPA 85 P 1255 DE) vorgeschlagen worden und sei hier noch einmal kurz erläutert: Bariumhaltige Schwermetall-Fluoridgläser bilden in Kontakt mit wäßrigen Säuren eine kristalline Grenzschicht aus, die im wesentlichen aus $BaF_2$ entsteht. Dabei stammt das Fluorid aus hydrolisierter Fluorozirkonsäure. Gibt man der Lösung Zirkonylionen, beispielsweise in Form von $ZrOCl_2$ . 8 $H_2O$-Salz zu, so erfolgt Komplexbildung zu Oxylfluorozirkonsäure. Die in ihrer Zusammensetzung gestörte Oberflächenschicht löst sich dann glatt auf, Kristalle verschwinden, die Oberfläche wird eingeebnet.

Bei der in Fig. 3 gezeigten Ausgestaltung des Verfahrens wird der massive Stab St aus dem Kernglas um seine waagerechte Längsachse A rotiert und auf die rotierende Umfangsfläche Of eine Mantelglasschicht mit Hilfe eines dünnen Glasstrahles GStr aufgebracht, wobei der Stab St und der Glasstrahl GStr in axialer Richtung relativ zueinander verschoben. Die aufgebrachte schmelzflüssige Mantelglasschicht wird mit einem Kühlgasstrom KStr zum Glas abgeschreckt. Nach Aufbringen einer solchen Mantelglasschicht kann auf die gleiche Weise eine nächste Mantelglasschicht aufgebracht werden. In der Figur 3 ist angenommen, daß bereits mehrere Mantelglasschichten aufgebracht worden sind und daß gerade eine weitere Mantelglasschicht MGIS auf den bereits aufgebrachten Mantel M aufgebracht wird.

Der zweckmäßigerweise radial zum Stab St gerichtete Glasstrahl GStr kann beispielsweise mit Hilfe eines relativ zum Stab St axial verschiebbaren Trichters Tr erfolgen, in den das in einem Tiegel Ti2 erzeugte schmelzflüssige Mantelglas MGI geschüttet wird und aus dessen Öffnung TrO der Glasstrahl GStr austritt.

Die Strömungsgeschwindigkeit des Glasstrahls GSTr wird so dosiert, daß die aufgebrachte und noch schmelzflüssige Mantelglasschicht MGIS durch den Kühlgasstrom KStr hinreichend schnell zum Glas abgeschreckt wird. Dies kann dadurch geschehen, daß die Viskosität des im Trichter Tr befindlichen Glases gesteuert wird. Die Steuerung kann mit Hilfe einer nicht dargestellten Heiz-oder Kühleinrichtung erfolgen, mit welcher der Trichter Tr und sein Inhalt auf eine der gewünschten Viskosität des Glases entsprecchende Temperatur eingestellt wird.

Auch bei diesem Verfahren muß zunächst durch Ätzen des Stabes St für eine einwandfreie Oberfläche Of des Stabes St gesorgt werden.

Zweckmäßigerweise wird dem Kühlgasstrom KStr ein fluorhaltiges, wasserstofffreies Molekülgas, beispielsweise $MF_3$, $SF_6$ oder auch $C_2F_6$, oder auch ein Chlorkohlenwasserstoff, beispielsweise $CCl_4$, zugesetzt. Auf diese Weise wird die Restfeuchte in der umgebenden Schutzgasatmosphäre durch chemische Reaktion zu Fluorwasserstoff verringert.

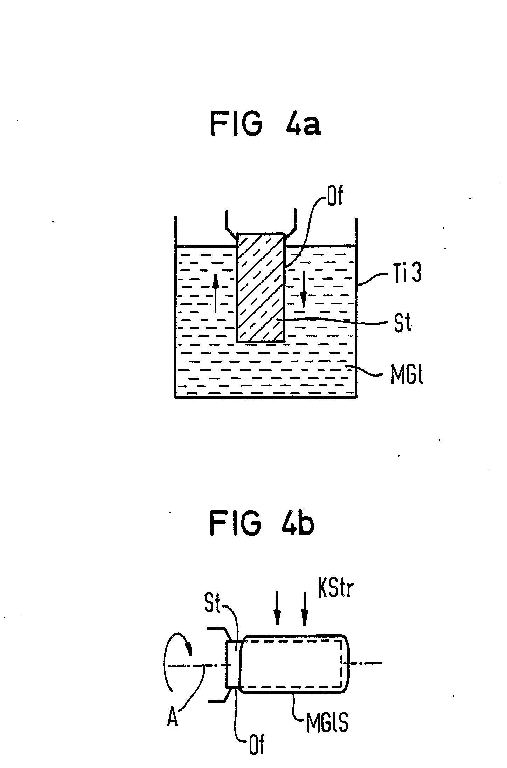

Bei dem Verfahren nach den Figuren 4a und 4b wird der zum Schutz gegen Zerspringen vorgewärmte massive Stab St aus dem Kernglas in schmelzflüssiges Mantelglas MGI in einem Tiegel Ti3, beispielsweise aus Platin, eingetaucht und wieder herausgezogen. Die an der Oberfläche Of des des relative kühlen Stabes St nach dem Herausziehen haften gebliebene und zumindest teilweise noch schmelzflüssige Mantelglasschicht MGIS wird mittels eines Kühlgasstromes KStr, ähnlich wie beim Verfahren nach Figur 3, hinreichend schnell zum Glas abgeschreckt. Dabei kann, wie in Figur 4b dargestellt, der Stab St wieder um seine Achse A rotiert werden. Für den Kühlgasstrom KStr gilt das gleiche wie beim Verfahren nach Figur 3. Ein dicke rer Mantel kann durch mehrfaches Eintauchen und Herausziehen erzeugt werden.

## Ansprüche

1. Verfahren zur Herstellung einer einen Kern aus Kernglas und einen Mantel aus Mantelglas aufweisenden Vorform (VF) zum Ziehen von Glasfasern, insbesondere Infrarot-Lichtwellenleitern für die optische Nachrichtentechnik durch Angießen von schmelzflüssigem Glas an einen vorbestimmten Körper aus festem Glas, **dadurchgekennzeichnet,** daß ein massiver Stab (St) aus dem Kernglas (KGl) mit schmelzflüssigem Mantelglas (MGl) umgeben wird.

2. Verfahren nach Anspruch 1 oder 2, **dadurch gekennzeichnet,** daß der massive Stab (St) in eine zylindrische Hohlform (HFo2) größeren Querschnitts aus einem relativ gut wärmeleitenden Material eingebracht und der ringförmige Hohlraum (rH) zwischen dem Stab (St) und der umgebenden Hohlform (HFo2) mit dem schmelzflüssigen Mantelglas (MGl) aufgefüllt wird.

3. Verfahren nach Anspruch 2, **dadurch gekennzeichnet,** daß die Hohlform aus Metall besteht.

4. Verfahren nach Anspruch 1, **dadurch gekennzeichnet,** daß das schmelzflüssige Mantelglas (MGl) in einem Strahl auf die Umfangsfläche des um seine Achse (A) rotierenden massiven Stabes (St) aufgegossen wird.

5. Verfahren nach Anspruch 4, **dadurch gekennzeichnet,** daß die auf den massiven Stab (St) aufgegossene schmelzflüssige Mantelglasschicht (MGIS) durch einen Kühlgasstrom (KStr) abgeschreckt wird.

6. Verfahren nach Anspruch 1, **dadurch gekennzeichnet,** daß der massive Stab (St) aus dem Kernglas (KGl) durch Eintauchen in das schmelzflüssige Mantelglas (MGl) und wieder Herausnehmen des Stabes (St) beschichtet wird.

7. Verfahren nach Anspruch 6, **dadurch gekennzeichnet,** daß die am wieder herausgenommenen massiven Stab (St) haften gebliebene schmelzflüssige Mantelglasschicht (MGIS) durch einen Kühlgasstrom (KStr) abgeschreckt wird.

8. Verfahren nach Anspruch 5 oder 7, **dadurch gekennzeichnet,** daß dem Kühlgasstrom (KStr) ein fluorhaltiges, wasserstofffreies Molekülgas oder/und ein Chlorkohlenwasserstoff zugesetzt wird.

9. Verfahren nach einem der vorhergehenden Ansprüche, **dadurch gekennzeichnet,** daß der massive Stab (St) aus dem Kernglas durch Gießen von schmelzflüssigem Kernglas (KGl) in eine zylindrische Hohlform (HFol) erzeugt wird.

10. Verfahren nach einem der vorhergehenden Ansprüche, **dadurch gekennzeichnet,** daß die Oberfläche (Of) des massiven Stabes (St) aus dem Kernglas geätzt und erst danach mit schmelzflüssigem Mantelglas (MGl) umgeben wird.

11. Verfahren nach Anspruch 10, **dadurch gekennzeichnet,** daß das Kernglas und das Mantelglas aus einem sauerstofffreien Schwermetall-Fluoridglas bestehen, daß zumindest das Kernglas Barium enthält und die Oberfläche (Of) des aus diesem Kernglas bestehenden massiven Stabes (St) mit einer $ZrOCl_2$-Lösung geätzt wird.

FIG 1a

- Ti 1
- KGl
- St
- HFo 1

FIG 1b

- Atl
- St
- Of
- Be

FIG 1c

- St
- rH
- Of
- HFo 2

FIG 1d

- MGl
- M
- St
- GF
- HFo 2
- VF

# FIG 2

M1

VF1

VF

M

GF

St1

GF1

St

I

# FIG 3

Ti 2

MGl

TrO

Tr

GStr

KStr

A

2

Of

St

M

MGlS

# FIG 4a

# FIG 4b